# EUROPÄISCHE PATENTSCHRIFT

(11) **EP 0 611 006 B1**
(45) Veröffentlichungstag und Bekanntmachung des Hinweises auf die Patenterteilung: **17.11.2004**
(21) Anmeldenummer: 94200328.6
(22) Anmeldetag: 10.02.1994
(51) Int. Cl.: H04Q 7/28, H04B 7/26

(54) **Mobilfunksystem mit Vollduplex- und Halbduplexverkehr**
Mobile radio system with full-duplex and half-duplex traffic
Système radio mobile à communication duplex intégral et semi-duplex

(30) Priorität: 11.02.1993 DE 4304095
(43) Veröffentlichungstag der Anmeldung: 17.08.1994
(73) Patentinhaber: LUCENT TECHNOLOGIES INC., Murray Hill, New Jersey 07974-0636 (US)
(72) Erfinder: Söllner, Michael, Dr., c/o Philips Patent. GmbH, D-20097 Hamburg (DE); Eizenhöfer, Alfons, Dr., c/o Philips Patent. GmbH, D-20097 Hamburg (DE)
(74) Vertreter: Watts, Christopher Malcolm Kelway, Dr.

(56) Entgegenhaltungen:
- EP-A- 0 339 740
- EP-A- 0 544 457
- WO-A-86/03635
- WO-A-92/08300
- WO-A-92/08326
- COMMUTATION ET TRANSMISSION, Bd.11, Nr.2, 1989, PARIS FR Seiten 39 - 50, XP000032850 M.COUDREUSE ET AL. 'LES SYSTEMES DE RADIOCOMMUNICATION MOBILE A RESSOURCES PARTAGEES TN10 - TN100 - TN200'
- COMMUTATION ET TRANSMISSION, Bd.9, Nr.1, 1987, PARIS FR Seiten 51 - 54 B.FINO ET AL. 'LES RADIOCOMMUNICATION AVEC LES MOBILES'

## Beschreibung

Die Erfindung betrifft eine Mobilfunkanordnung nach dem Oberbegriff des Anspruches 1. Eine solche ist mit Basisstationen und Mobilstationen zur Kommunikation zwischen Mobilstationen untereinander und/oder Mobilstationen und drahtgebundenen Teilnehmern, ausgestattet, wobei eine Vielzahl von Funkkanälen in Richtung von Mobilstation zu Basisstation, hier Uplink-Funkkanäle genannt, und eine Vielzahl von Funkkanälen in Richtung von Basisstation zu Mobilstation, hier Downlink-Funkkanäle genannt, paarweise einander als Duplex-Funkkanäle zugeordnet sind und wobei zur Belegung eines Duplex-Funkkanals beziehungsweise zum Wechsel in ein Bündelfunksystem eine Signalisierung zwischen Basisstation und Mobilstation auf wenigstens einem Kontrollkanal vorgesehen ist.

Mobilfunkanordnungen, nachfolgend als Mobilfunksysteme bezeichnet, werden zur Abdeckung eines größeren Versorgungsbereiches schon seit längerem als zellulare Funknetze konzipiert. In jeder Zelle eines solchen Funknetzes ist mindestens eine ortsfeste Basisstation, auch Feststation genannt, vorgesehen, die die Funkverbindung zu den in Ihrer Funkzelle befindlichen Mobilstationen im Vollduplex-Betrieb, auch Duplex-Betrieb genannt, aufrecht erhält. Mittels Signalisierungsverfahren auf einem Kontrollkanal wird sichergestellt, dass immer nur ein Mobilteilnehmer einen Vollduplex-Funkkanal belegt. Für geschlossene Benutzergruppen existieren auch sogenannte Bündelfunksysteme, bei denen die einzelnen Benutzer im Halbduplex-Verfahren auf einen Funkkanal zugreifen können. Der Zugriff auf diesen Funkkanal wird ebenfalls durch geeignete Signalisierungsverfahren sichergestellt, wobei bei Gruppengesprächen immer nur ein Teilnehmer einer Benutzergruppe sprechen kann, aber alle Bündelfunkteilnehmer der gleichen Benutzergruppe diesen Teilnehmer hören können.

Solche Bündelfunksystem sind sehr frequenzökonomisch, da eine Benutzergruppe wegen des Halbduplex-Betriebs nur einen einzigen Funkkanal benötigt.

Mobilfunksysteme und Bündelfunksysteme sind Funksysteme, die in voneinander verschiedenen Frequenzbändern arbeiten und auch von ihrer geographischen Ausdehnung nicht übereinstimmen. Beispielsweise in Deutschland zur Zeit bestehende Bündelfunksysteme sind sogar regional auf bestimmte Großstädte und deren Umgebung beschränkt.

Aus WO 92/08326 ist ein Verfahren bekannt, welches mit nur einem Funkempfänger die Teilnahme sowohl an einem Mobilfunksystem als auch an einem Bündelfunksystem ermöglicht, wobei ein Wechsel zwischen beiden System beliebig möglich ist. Hierzu werden auf dem jeweils von den Mobilstationen überwachten Kontrollkanälen unterschiedliche Zugriffsnummern verwendet, anhand derer eine Mobilstation unterscheiden kann, in welchen der beiden Systeme gerade nach ihr gerufen wird, beziehungsweise ob im Bündelfunksystem gerade ein Gruppengespräch ihrer eigenen Benutzergruppe durchgeführt wird.

Aufgabe der Erfindung ist es, eine Mobilfunkanordnung der eingangs genannten Art derart auszugestalten, dass sie eine größere Flexibilität und bessere Frequenzökonomie bietet.

Diese Aufgabe wird durch die Merkmale des Anspruchs 1 gelöst. Im Einzelnen sind Koppelmittel zur Koppelung eines Uplink-Funkkanals und/oder eines drahtgebundenen Teilnehmers auf wenigstens einen Downlink-Funkkanal vorgesehen, um im Bündelfunkbetrieb einen Duplexkanal für den aktiven Teilnehmer zu bilden, während für die passiven Teilnehmer lediglich Simplexkanäle benötigt werden, die insgesamt als Gruppenkanal oder gemeinsamer Gruppenkanal bezeichnet werden.

Durch die Koppelung von Uplink-Funkkanälen, bzw. von ankommenden Signalen von drahtgebundenen Teilnehmern auf einen Downlink-Funkkanal werden in einem Vollduplex-Mobilfunksystem Halbduplex-Funkkanäle gebildet, die zu Gruppengesprächen, wie in einem Bündelfunksystem genutzt werden können. Auf diese Weise wird statt zweier nebeneinander exisitierender Netze nur noch ein gemeinsames Mobilfunksystem benötigt. Hierdurch können die bisher für beide Netze benötigten Funkkanäle viel besser genutzt werden, da sie nun je nach Bedarf, wahlweise als Vollduplex-Funkkanal, für Zweiergespräche oder als Halbduplex-Funkkanal für Gruppengespräche genutzt werden können. Da Mobilfunksysteme im allgemeinen flächendeckend ausgebaut werden, wird auf diese Weise Benutzern, die ortsbedingt bisher keine Möglichkeit zur Teilnahme an einem Bündelfunksystem hatten, auch diese Möglichkeit eröffnet. Die Ausnutzung einer einzigen Infrastruktur ist zudem kostengünstiger als der paralelle Betrieb zweier unterschiedlicher Systeme. Ein weiterer Vorteil besteht darin, dass sich allein durch Bereitstellung der Koppelmittel, in jedes bestehende Mobilfunksystem, beispielsweise dem bekannten ETSI-GSM-Mobilfunksystem ein Bündelfunksystem ohne großen Aufwand einfügen läßt. Die Koppelmittel können hierbei sowohl im Funknetz selbst, nachfolgend auch Netz genannt, beispielsweise in einer jeweiligen Feststation des Netzes angeordnet sein, oder aber auch so ausgestattet sein, dass sie beispielsweise wie ein Netzteilnehmer am Netz angeschlossen werden, und vom Nachrichtenübertragungssystem ankommende Daten zum Nachrichtenübertragungssystem zurücksenden.

Vorzugsweise ist in der Mobilfunkanordnung für jede an einem Gruppengespräch beteiligte Mobilstation ein ausschließlich der jeweiligen Mobilstation zugeordneter Signalisierungskanal im Vollduplex-Verfahren vorgesehen. Bei Verwendung einer Zeitmultiplexstruktur können die Signalisierungskanäle aller Gruppenteilnehmer auf einem gemeinsamen Funkkanal untergebracht werden.

Eine Ausführungsform sieht vor, daß die zum koordinierten Senden auf dem gemeinsamen Gruppenkanal von der Mobilstation benötigten Informationen (beispielsweise der entfernungsabhängige Sendezeitpunkt 'timing advance') von der Mobilstation dadurch bestimmt werden, daß die Mobilstation verkürzte Zugriffsmeldungen aussendet, die Basisstation diese Meldungen nach Ankunftszeitpunkt oder Inhalt analysiert und verarbeitet, und eine Steuereinheit im Netz der Mobilstation eine Meldung übermittelt, die mindestens die zum Senden notwendigen Informationen enthält. Alternativ hierzu können die zum koordinierten Senden auf dem gemeinsamen Gruppenkanal von der Mobilstation benötigten Informationen von der Mobilstation durch Kommunikation mit dem Netz auf dem ihr zugeordneten Duplex-Signalisierungskanal bestimmt werden.

In einer weiteren Ausgestaltung wartet eine Mobilstation, die Informationen auf einem gemeinsamen Gruppenkanal übertragen möchte, zunächst, bis dieser Gruppenkanal frei ist und sendet anschließend verkürzte Zugriffsmeldungen. Das Netz sendet auf die verkürzten Zugriffsmeldungen Rückmeldungen. Diesen Rückmeldungen entnimmt die Mobilstation beispielsweise die Zugriffsberechtigung auf den Gruppenkanal, den Zugriffszeitpunkt, den Sendezeitpunkt oder die Sendeleistung. Sofern der Mobilstation bereits ein ausschließlich ihr zugeordneter Duplex-Signalisierungskanal zugeteilt ist, sendet sie die Zugriffsmeldung auf dem ihr zugeordneten Duplex-Signalisierungskanal. Auf diese Weise können Zugriffskollisionen vermieden werden.

Hierbei wartet die Mobilstation, wenn sie dem Netz den Zugriffswunsch auf den gemeinsamen Gruppenkanal signalisiert hat, eine gewisse, zu berechnende Zeit auf die erforderliche Rückmeldung vom Netz, und wiederholt ihren Zugriffswunsch, wenn vom Netz keine Reaktion erfolgt.

Eine Möglichkeit, um den Zugriff auf dem gemeinsamen Gruppenkanal zu regeln, kann darin bestehen, daß die Mobilstation nach Aussenden ihrer Information auf dem gemeinsamen Gruppenkanal den Gruppenkanal ohne Signalisierung frei gibt.

Eine besondere Ausführungsform sieht vor, daß im Nachrichtenübertragungssystem zwei oder mehrere Gruppenkanäle in der gleichen oder verschiedenen Zellen miteinander verkoppelt sind. Vorzugsweise kann eine solch Koppelung mit bekannten Konferenzeinrichtungen erfolgen. Auf diese Weise kann die Kapazität oder die Flächenabdeckung der Gruppengespräche innerhalb des Mobilfunksystems erhöht werden.

Eine Ausgestaltung des Nachrichtenübertragungssystem sieht eine speziell ausgestaltete Steuereinheit vor, mit der die einzelnen Teilnehmer zunächst einen Gesprächsaufbau wie ein Gesprächsteilnehmer, der eine Duplexgesprächsverbindung mit einem anderen Netzteilnehmer wünscht, vollziehen und erst dann von der Steuereinheit auf den gewünschten Gruppenkanal verwiesen werden. Auf diese Weise kann ein Großteil der Protokolle gemeinsam genützt werden.

In einer speziellen Ausgestaltung wird die Kommunikation während des normalen Gesprächsaufbaus mit dem Schlüssel des individuellen Teilnehmers verschlüsselt und dann erst dem Teilnehmer der Schlüssel für das Gruppengespräch zugeteilt.

Eine andere Ausführungsform sieht vor, daß das Netz Informationen über Kanäle für Gruppengespräche aussendet. Hierdurch wird es ermöglicht, daß sich die Mobilstationen aufgrund der vom Netz ausgesendeten Informationen über Gruppengespräche einer Zelle selbst zuordnen.

Wenn sich Mobilstationen aufgrund der ausgesendeten Informationen über Gruppengespräche direkt einem Gruppenkanal zuordnen, können spezielle Prozeduren bespielsweise zum Gesprächsaufbau oder Weiterreichen (handover) vermieden werden können.

In einer speziellen Ausgestaltung ist der einer Mobilstation zugeordnete permanente Signalisierungskanal zur Teilnehmerüberwachung oder für sicherheitsrelevante Dienste während des Gruppengesprächs vorgesehen.

Die Erfindung wird nun anhand von Ausführungsbeispielen und den Zeichnungen näher beschrieben und erläutert.

Es zeigen:
- Fig. 1: Eine Übersicht über ein zellulares Mobilfunksystem
- Fig. 2: Schematischer Aufbau einer Feststation BTS
- Fig. 3: Aufbau einer Signalprozessoreinheit SPU für eine Feststation BTS
- Fig. 4: Signalfluß in einer Feststation und zwischen Mobilstationen für ein Gruppengespräch innerhalb des Sende- und Empfangsbereiches einer einzigen Feststation
- Fig. 5: Signalfluß zwischen Feststationen und einer Zentrale und Mobilstationen während eines Gruppengespräches, das sich über den Sende- und Empfangsbereich mehrerer Feststationen erstreckt
- Fig. 6a: Zeitmultiplex-Rahmenschema für GSM-Halbratenkanal
- Fig. 6b: Zeitmultiplex-Rahmenschema für einen Gruppen-Nutzkanal
- Fig. 6c: Zeitmultiplex-Rahmenschema für einen Gruppen-Kontrollkanal

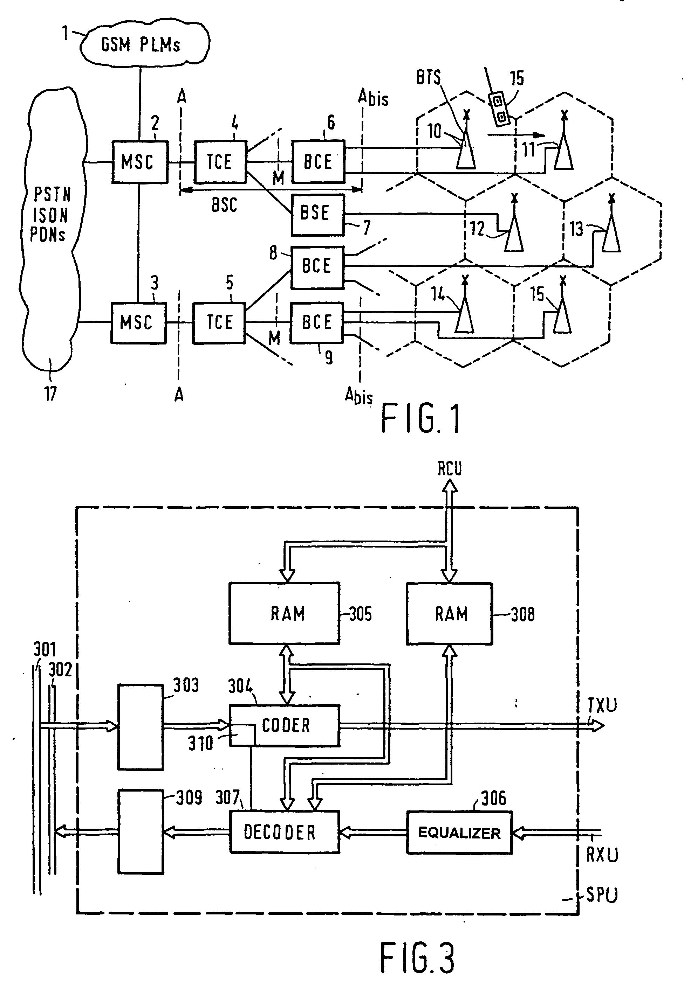

Fig. 1 zeigt die Struktur eines zellularen Mobilfunksystems. Als Ausführungsbeispiel wurde das in Europa bereits im Betrieb befindliche GSM-System (Global System for Mobile Communication) gewählt. Eine Übersicht über dieses Mobilfunksystem findet sich beispielsweise in der EP 0 544 457. Da das GSM-Netz dem Fachman hinlänglich bekannt ist, wird bei der Beschreibung der Erfindung nur insoweit auf das GSM-Netz eingegangen, als es für das Verständnis der Erfindung notwendig ist. Im übrigen ist die Erfindung natürlich nicht nur auf das GSM-Netz beschränkt, sondern auch für alle anderen Mobilfunksysteme geeignet, bei denen Duplex-Verbindungen vorgesehen sind.

Das Skelett des GSM-Netzes wird gebildet aus Funkvermittlungsstellen (MSC = Mobile Switching Center) welche untereinander über Datenleitungen verbunden sind. Die Funkvermittlungsstelle MSC ist eine digitale Vermittlungsstelle hoher Leistungsfähigkeit, die sowohl den Übergang zwischen dem GSM-Netz und anderen Telekommunikationsnetzen, wie z.B. dem öffentlichen Telefonnetz (PSTN), dem ISDN-Netz, usw. herstellt, als auch das GSM-Netz verwaltet. An jeder Funkvermittlungsstelle MSC sind ein oder mehrere Funkstationssteuereinrichtungen (BSC = Base Station Controller) angeschlossen. Die Feststationssteuereinrichtung BSC wiederum verwaltet eine oder mehrere Feststationen (BTS = Base-Tranceiver Station) wobei jede Feststation BTS eine Zelle funktechnisch versorgt. Zur Herstellung der entsprechenden Verbindungen zwischen der Funkvermittlungsstelle MSC und der jeweiligen Feststation BTS ist in jeder Feststationssteuereinrichtung BSC jeweils ein weiteres Koppelfeld vorgesehen.

Der Übergang von der Funkvermittlungsstelle MSC zur Feststationssteuereinrichtung BSC ist als sogenannte A-Schnittstelle genormt. Als Datenformat sieht die A-Schnittstelle das bekannte PCM30-Format vor, so daß zur Datenübertragung herkömmliche PCM30-Übertragungsstrecken benutzt werden können. Das PCM30-Signal ist ein Zeitmultiplexsignal, bei dem 30 Datensignale, beispielsweise digitalisierte Fernsprechsignale mit einer Datenrate von 64 Kbit/s zu einem Bitstrom von 2,048 Mbit/s zusammengefaßt werden. Der PCM30-Rahmen ist hierzu in 32 Zeitschlitze zu je 8 Bit unterteilt. Der erste Zeitschlitz (Nr. 0) enthält eine Kennzeichnung des Rahmenbeginns, der 17te Zeitschlitz (Nr. 16) wird für die Übertragung von Signalisierung der in den verbleibenden 30 Zeitschlitzen untergebrachten Datenkanäle verwendet.

Für die erste Aufbaustufe des GSM-Systems wurde eine Sprachkodierung gewählt, bei der basierend auf der bekannten LPC-Technik (LPC = linear predictive coding) in Verbindung mit einer Langzeitprädiktion (LTP = long term prediction) und einer Kodierung des Restsignals durch eine Folge von Pulsen in einem regelmäßigen Zeitraster (RPE = regular pulse exitation) für Sprachproben von jeweils 20 msec Dauer jeweils ein Datenblock mit 260 Bit gebildet wird. Dies entspricht einer Datenrate von genau 13,0 Kbit/s. Im leitungsgebundenen Fernsprechnetz hingegen ist für die digitale Übertragung von Sprechsignalen eine Pulscodemodulation (PCM) mit einer Datenrate von 64 Kbit/s üblich. Zur Umwandlung von PCM-Signalen in GSM-Signale und umgekehrt sind an der A-Schnittstelle Transkodiereinrichtungen (TCE = Transcoder Equipment) vorgesehen. Die jeweils 260 zusammengehörigen Bits einer Sprachprobe von 20 ms werden im folgenden als Netto-Bits bezeichnet, weil Sie keine weiteren Informationen enthalten. Diese Netto-Bits werden mit zusätzlichen Steuerbits und nicht belegten Bits auf insgesamt 320 Bits erweitert und bilden einen sogenannten TRAU-Rahmen (TRAU = Transcoding Rate Adaption Unit). Die Datenrate des TRAU-Rahmens beträgt somit genau 16 Kbits/s.

In einer weiteren Ausbaustufe des GSM-Netzes sollen die Gesprächsdaten bei vergleichbarerer Gesprächsqualität wahlweise auch nur mit der halben Datenrate codiert werden. Durch Verwendung solcher Halbraten-Datenkanäle kann auf diese Weise die Übertragungskapazität, vor allem auf dem Funkübertragungsweg des GSM-Netzes verdoppelt werden. Da bezüglich des zu verwendenden Kodierungsverfahrens zur Zeit noch keine endgültigen Festlegungen vorliegen, wird im folgenden stellvertretend die Übertragung von Vollraten-Datenkanälen beschrieben.

Obwohl die Transcodiereinrichtung TCE logischer Teil der Feststationssteuereinrichtung BSC ist, ist sie örtlich bei der jeweiligen Funkvermittlungsstelle MSC untergebracht. Auf der sogenannten M-Schnittstelle, der Übertragungsstrecke zwischen der Transkodiereinrichtung TCE und der zentralen Feststationssteuereinrichtung BCE (Base Station Central Equipment), wird auf diese Weise nur noch ein Viertel der Übertragungskapazität benötigt, weil in jedem PCM30-Kanal mit 64 Kbit/s gleichzeitig vier TRAU-Signale mit 16 Kbit/s untergebracht werden. Da die Entfernung zwischen Funkvermittlungsstelle und zentraler Feststationssteuereinrichtung BCE bis zu mehreren 100 km betragen kann, können auf diese Weise Übertragungskosten eingespart werden.

Zur Datenübertragung zwischen der zentralen Feststationssteuereinrichtung BCE und den einzelnen Feststationen BTS (sog. A_{bis}-Schnittstelle) ist ebenfalls ein PCM30-Rahmen vorgesehen, wobei innerhalb des PCM30-Rahmens ebenfalls logische Unterkanäle gebildet sind, so daß für jeden Nutzkanal 16 Kbit/s Übertragungskapazität zur Verfügung stehen.

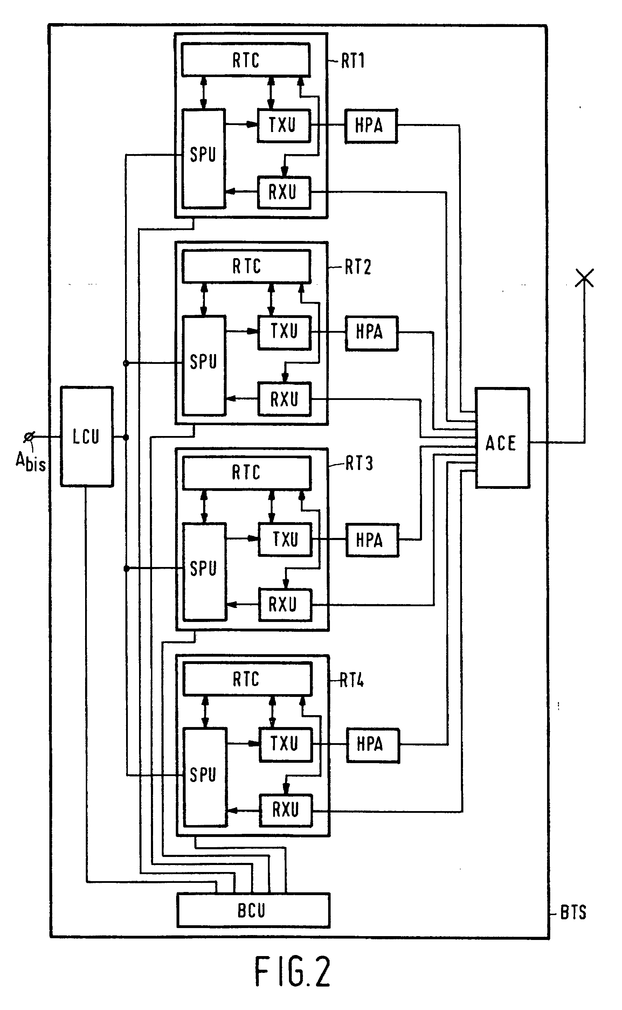

Fig. 2 zeigt den schematischen Aufbau einer Feststation BTS. In einem Verbindungskonzentrator LCU (Line Concentrator Unit) werden aus dem über die A_{bis} Schnittstelle kommenden Datenstrom Nutzsignale und Steuersignale voneinander getrennt. Über einen internen Datenbus der Feststation BTS werden die Nutzdaten auf einzelne Funkteile RT1 ... RT4 (RT= Radio Terminal) verteilt, wobei für jede Funkfrequenz ein eigener Funkteil RT vorgesehen ist. Da das GSM-System als TDMA-System mit jeweils acht Zeitschlitzen auf einer Frequenz konzipiert ist, kann ein Funkteil RT jeweils acht Übertragungskanäle bereitstellen. Eine im Funkteil RT angeordnete Signalprozessoreinheit SPU (Sigalling Processing Unit) bildet aus den jeweiligen Nutzdaten Zeitschlitzsendesignale, die in einem Sendeteil TXU (Transmitter Unit)einem ebenfalls im Sendeteil erzeugten HF-Träger aufmoduliert werden und gegebenenfalls in einer Leistungsendstufe HPA (High Power Amplifier) auf eine entsprechende Ausgangssendeleistung gebracht werden. Über eine Antennenkoppeleinrichtung ACE (Antenna Coupling Equipment) werden die Sendeausgangssignale aller Funkteile einer Feststation zu einem einzigen Sendesignal zusammengefasst.

Die von einer Antenne empfangenen Signale werden im Empfängerteil RXU (Receiver Unit) des Funkteils RT frequenzselektiert und in komplexe, digitale Basisbandsignale umgewandelt. Die basisbandgewandelten Signale werden in der Signalprozessoreinheit SPU decodiert und zu einem fortlaufenden Datenstrom zusammengesetzt und über den internen Datenbus und den Verbindungskonzentrator über die A_{bis}-Schnittstelle zur BCE übertragen.

Zur Erzeugung eines zentralen Taktsignals ist in jeder Feststation außerdem eine interne Steuereinrichtung BCU (BTS-Central-Unit) vorgesehen.

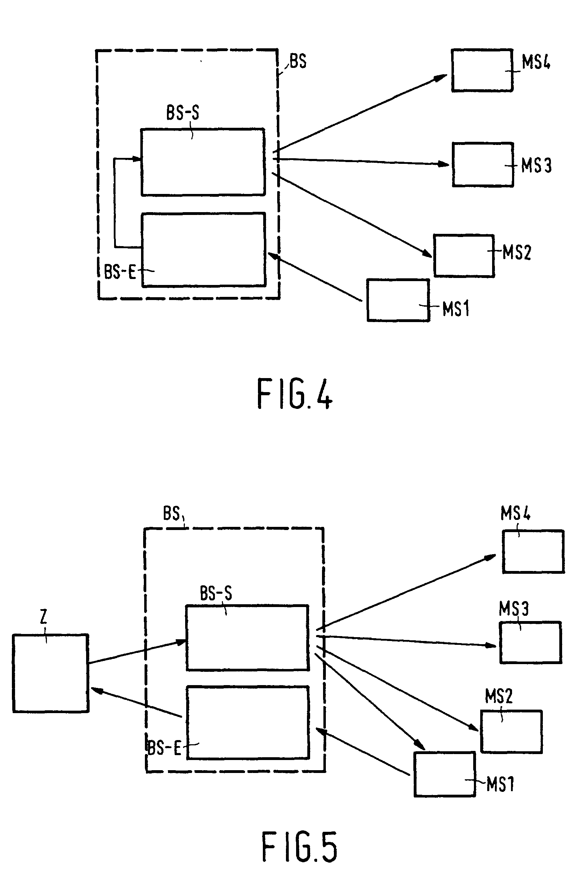

Fig. 3 zeigt den prinzipiellen Aufbau einer Signalprozessoreinheit SPU. Der interne Datenbus der Feststation BTS setzt sich zusammen aus einem ersten Datenbus 301, der die über die A_{bis}-Schnittstelle ankommenden Datensignale führt und einem zweiten Datenbus 302 auf dem die über die A_{bis}-Schnittstelle abgehenden Daten geführt sind. Ein in der Signalprozessoreinheit SPU angeordneter Koder 304 steuert ein erstes Interface 303 so, daß die jeweils für einen Funkkanal bestimmten Daten vom internen Datenbus 301 übernommen werden. Die übernommenen Daten werden vom Koder 304 entsprechend dem jeweiligen Funkkanal, d.h. entsprechend dem Zeitschlitz in dem sie gesendet werden sollen, in einem ersten Speicher 305 zwischengespeichert. Hierzu werden die immer noch im TRAU-Rahmen eingebundenen Nutzdaten extrahiert. Die 260 Bits einer 20 ms-Sprachprobe werden vom Koder 304 mit zusätzlichen Bits zur Fehlererkennung versehen und durch eine Faltungskodierung auf insgesamt 456 Bit erweitert, wodurch eine große Sicherheit gegen Übertragungsfehler gegeben ist. Aus diesen 456 Bits werden acht Teilblöcke zu je 57 Bit gebildet. In jedem Zeitschlitz werden jeweils ein Teilblock eines TRAU-Rahmens und ein entsprechender Teilblock des jeweils folgenden TRAU-Rahmens übertragen, so daß nach jeweils acht TDM-Rahmen insgesamt zwei TRAU-Rahmen übertragen werden. Durch diese Verschachtelung (Interleaving) sind die Brutto-Bits einer 20 ms-Sprachprobe auf acht aufeinanderfolgenden TDMA-Rahmen verteilt, so daß das Signal weniger anfällig für kurze Störungen wird, die dadurch entstehende Verzögerung der Übertragung jedoch nicht zu groß wird. In ähnlicher Weise werden auch Signalisierungsdaten, die eine Netto-Länge von 184 Bits aufweisen, ebenfalls mit einer Brutto-Länge von 456 Bits übertragen.

Zur Bildung des Zeitschlitzsignales fügt der Koder zwischen den zu übertragenenden Teilblöcken mit je 57 Bit noch eine Trainingssequenz, die ein bestimmtes Bitmuster enthält von 26 Bits sowie jeweils zwei weitere Signalisierungsbits (Stealing Flags) und zu Beginn und Ende des Zeitschlitzsignals noch drei Anfangs- und Endbits hinzu. Der auf diese Weise für jeden der acht Zeitschlitze gebildete Datenblock von jeweils 148 Bit wird vom Koder 304 zeitgerecht zum Sendeteil TXU geschickt.

Die jeweils vom Empfangsteil RXU ins Basisband umgesetzten Empfangssignale werden in einem Entzerrer 306 für jedes zu dekodierende Bit in Abtastwerte umgesetzt. Ein Dekoder 307 berechnet aus diesen Abtastwerten für jeden Zeitschlitz die empfangen Datenblöcke, entschachtelt (Deinterleaving) die Teildatenblöcke und setzt sie wieder zu einem TRAU-Rahmen zusammen. Zur zeitgerechten Absendung dieser TRAU-Rahmen über eine zweite Schnittstellensteuerung 309 werden die jeweils errechneten TRAU-Rahmen in einem zweiten Speicher 308 zwischengespeichert.

Zur Übertragung der Gesprächsdaten werden zusätzlich Signalisierungsdaten benötigt. Im GSM-Sytem sind diese Signalisierungsdaten ebenfalls durch Zeitmultiplexbildung in unterschiedlichen logischen Kanälen, sogenannten Kontrollkanälen (control channel) organisiert, die je nach Aufgabe einen physikalischen Kanal vollständig belegen, oder auch den gleichen physikalischen Kanal wie die Gesprächsdaten, bei entsprechend geringerer Datenübertragungsrate nutzen. Im folgenden wird zunächst eine Übersicht über die wichtigsten Kontrollkanäle des bestehenden GSM-Systems gegeben um dann später die für Gruppengespräche vorteilhaften, zusätzlich vorgeschlagenen Kontrollkanäle zu erläutern.

Auf dem BCCH sendet jede Basisstation verschiedene Systeminformationen. Der BCCH wird ausschließlich in Richtung von der Basisstation zu der Mobilstation, im sogenannten downlink, benötigt. Mittels der auf dem BCCH ausgesandten Systeminformationen wird jede Mobilstation, die sich innerhalb der Funkzelle der betreffenden Basisstation befindet, in die Lage versetzt, mit der ihr zugeordneten Basisstation Verbindung aufzunehmen. So enthalten die Systeminformationen des BCCH beispielsweise die Frequenz eines nur in Richtung von Mobilstation zu Basisstation, dem sogenannten uplink, vorgesehenen Kontrollkanals RACH (random access channel) auf dem eine Mobilstation einen Kanal anfordern kann, der ihr dann zur auschließlichen Benutzung bidirektional zur Verfügung steht. Der angeforderte Kanal wird aus einer in der Basisstation abgespeicherten Funkkanalliste entnommen und in einer sogenannten immediate assignement message der Mobilstation über den CCCH mitgeteilt. Üblicherweise wird der zugewiesenen Kanal zunächst als SDCCH (stand alone dedicated control channel) in beiden Richtungen ausschließlich zum Datenaustausch benutzt. Kommt eine Gesprächsverbindung zu Stande so wird der ausgewählte Kanal im Zeitmultiplexbetrieb als Gesprächskanal TCH (traffic channel) und zur Signalisierung während einer laufenden Gesprächsverbindung als SACCH (slow associated control channel) benutzt.

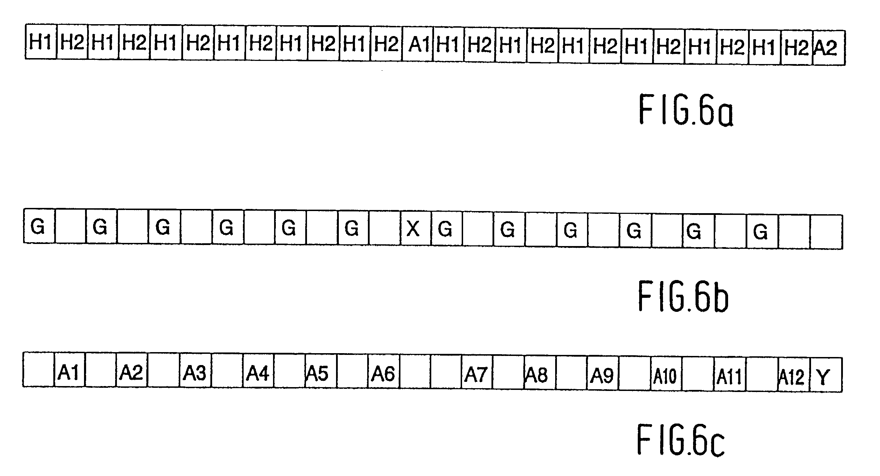

Figur 6a zeigt das Zeitmultiplexschema für zwei Gesprächskanäle H1, H2, die als Halbraten-Datenkanäle ausgeführt sind. Bei diesem Zeitmulitplexschema ist für jeweils zwölf Gesprächskanal-Zeitschlitze H1 beziehungsweise H2 jeweils ein Kontrollkanal-Zeitschlitz A1 beziehungsweise A2 im Zeitmulitplexrahmenschema enthalten. In diesen Kontrollkanal-Zeitschlitzen A1 beziehungsweise A2 wird die Information des jeweiligen SACCH übertragen.

Um einen ungestörten Betrieb einer Gesprächsverbindung sicherzustellen, ist im GSM-System ein Ausweichen auf eine andere Frequenz innerhalb einer Zelle (intracell handover) und ein Wechsel in eine andere Zelle (intercell handover) vorgesehen. Zur Beurteilung ihrer Funksituation sendet eine Mobilstation auf dem SACCH fortlaufend measurement reports, die Meßdaten über die eigene Zelle und über benachbarte Zellen enthalten.

Hierzu werden auf dem SACCH einer jeden Mobilstation die Frequenzen der BCCHs der benachbarten Basisstationen mitgeteilt. Der Zeitmultiplexrahmen des GSM-Systems ist so aufgebaut, daß er auch Zeitschlitze enthält, die weder von einem Verkehrskanal noch von einem Kontrollkanal belegt sind. In diesen Zeitschlitzen wird der Empfänger der Mobilstation auf die BCCHs der benachbarten Basisstationen abgestimmt und mißt deren Signalstärke. Die gemessenen Signalstärken werden im SACCH zur Basisstation übertragen. Des weiteren wird im GSM-System von jeder Mobilstation die Signalstärke und die Bitfehlerrate des ausgewählten Kanals gemessen und ebenfalls zur Basisstation über den SACCH gesendet.

Zur Bildung von Gruppengesprächen in einem Funksystem, das sowohl Duplexgespräche zwischen zwei Teilnehmern, beziehungsweise Duplexverbindungen zwischen mehreren Teilnehmern im Wege einer Konferenzschaltung als auch Gruppengespräche im Halbduplexbetrieb ermöglichen soll, ist die Koppelung des uplink-Funkkanals der Duplex-Verbindung auf den downlink-Funkkanal derselben Duplexverbindung vorgesehen. Im bevorzugten Ausführungsbeispiel wird diese Koppelung durch entsprechende Programmierung der Signalprozessoreinheit SPU erzielt. Im Koppelbetrieb werden alle für den als Gruppenkanal vorgesehenen Funkkanal vom Dekoder 307 empfangenen TRAU-Rahmen anstelle der von der Feststationsteuereinrichtung BSC ankommenden TRAU-Rahmen als jeweils nächster TRAU-Rahmen vom Koder 304 zum Sendeteil gesandt. Hierzu ist lediglich eine entsprechende Speicheroperation erforderlich, bei der die im zweiten Speicher 308 stehenden TRAU-Rahmenblöcke in den Speicherbereich des ersten Speichers 305 an die Stelle kopiert werden, an der üblicherweise für eine Duplexverbindung die von der Feststationssteuereinrichtung BSC empfangenen TRAU-Rahmenblökke stehen. Auf diese Weise verwendet der Koder 304 dann die kopierten TRAU-Rahmen zur Aussendung.

Bei diesem Ausführungsbeipiel ist ein Gruppengespräch auf das Sende- und Empfangsgebiet einer Feststation begrenzt. Dies entspricht beispielsweise in Figur 1 dem Gebiet der Zelle 10. Dies ist für lokal begrenzte Gruppengespräche, die nur innerhalb eines örtlich eng begrenzten Gebietes erforderlich sind auch sachgerecht. Da bei GSM beispielsweise eine Funkzelle bis zu einem Radius von ca. 37 km ausgedehnt werden kann, ist dennoch ein relativ großes Gebiet durch Gruppenfunk bedienbar. Typische Beispiele für solche Einzellen-Gruppenfunkanwendungen sind beispielsweise Taxifunk, innerhalb der Großzelle einer Stadt oder aber auch Gruppengespräche innerhalb einer Kleinzelle, beispielsweise der Gespräche von Rangierarbeitern innerhalb der streng abgegrenzten Fläche eines Bahnhofes.

Der Vorteil der Erfindung liegt auch gerade darin, daß der Standort einer Feststation in erster Linie entprechend den örtlichen Bedürfnissen der geplanten Gruppengesprächen eingerichtet werden kann. Die so plazierte Feststation dient primär zur Durchführung von Gruppengesprächen, kann aber sekundär auch als Netzergänzung für normale Duplex-Verbindungen genutzt werden. Zunehmend ergibt sich nämlich das Problem zusätzliche Feststationsstandorte, beziehungsweise Antennenstandorte zu finden. Auf diese Weise kann ein Standort mit nur einer Hardware gleichzeitig für klassiche Mobilfunkanwendung als auch für Gruppengespräche genutzt werden.

Eine Gruppe kann dabei aus zwei oder mehreren Teilnehmern bestehen. Das besondere Merkmal ist der Halbduplexbetrieb, d.h. daß immer nur ein Teilnehmer aktiv ist und Informationen aussendet, während die anderen Teilnehmer passiv sind, d.h. sie senden nicht, sondern empfangen nur. Zur Aktivierung eines Teilnehmers kann beispielsweise im jeweiligen Mobilfunkgerät ein Schalter (push-to-talk-button) vorgesehen sein, der vom jeweiligen Benutzer gedrückt gehalten werden muß, solange er auf dem Gruppenkanal eine Nachricht senden will.

In Figur 4 besteht die Gruppe aus den Mobilstationen MS1, MS2, MS3 und MS4. Sie benutzen gemeinsam einen Kanal der Basisstation als "Gruppenkanal", während auf den anderen Kanälen dieser Basisstation normaler Verkehr (z.B. nach GSM -Standard) abgewickelt werden kann. In Figur 4 ist die Mobilstation MS1 aktiv und sendet zur Basisstation. Die Basisstation empfängt das Signal der Mobilstation MS1 im Empfänger BS-E, verarbeitet dieses, leitet die empfangenen Informationen zu ihrer Sendeeinrichtung BS-S und sendet sie wieder aus. Wenn im Übertragungsverfahren das Senden und Empfangen durch Frequenz-, Zeit- oder Codemultiplex voneinander getrennt sind, so kann die Mobilstation MS1 das gesendete Signal wieder empfangen und mit dem von ihr gesendeten Signal vergleichen. Auf diese Weise kann eine Mobilstation feststellen, ob ihr Signal von der jeweiligen Basissstation akzeptiert wurde.

In einer anderen Konfiguration wird die Kommunikation zwischen einer Zentraleinheit und der Gruppe der Mobilstationen geführt(siehe Figur 5). In diesem Fall ist eine Duplexverbindung zur aktiven Mobilstation MS1 möglich. Die Mobilstationen MS2, MS3 und MS4 sind passiv und hören in diesem Fall nur die Zentrale und nicht die Mobilstation MS1. Die Zentrale kann hierbei als Festnetzteilnehmer ausgestaltet sein, so daß im bestehnden Mobilfunksystem keinerlei Eingriffe erforderlich sind. Die Koppelmittel können somit auch nur in einer solchen Zentrale vorgesehen werden, wobei die Schleife zwischen uplink- und downlink-Funkkanal in der Zentrale durch Koppelung des ankommenden Gesprächs auf das abgehende Gespräch geschlossen wird.

Diese Betriebsart kann auch Halbduplex mit einer Koppelschaltung in der Basisstation betrieben werden. Dann können die Mobilstationen MS2, MS3 und MS4 sowohl die Zentrale, als auch die Mobilstationen MS1 abhören.

Durch Verwendung von Konferenzschaltungen in einer Vermittlungseinrichtung können Gruppenkanäle von verschiedenen Feststationen zusammengeschaltet werden. Der Betrieb kann auf diese Weise für eine Gruppe auf mehrere Kanäle in der gleichen oder in anderen Zellen ausgedehnt werden. Sind diese Konferenzschaltungen an einer Funkvermittlungsstelle angeordnet, so ist es auf diese Weise möglich den Gruppenfunk flächendeckend oder je nach Bedarf auch nur partiell über das Gebiet einer Funkvermittlungsstelle auszudehen. Hierbei bleibt weiterhin der Vorteil erhalten, daß innerhalb einer Zelle jeweils nur ein Duplexkanal zur Gruppenbildung benötigt wird.

Weiterreichen (handover) zwischen solchen Kanälen ist möglich, indem das Kommando zum Weiterreichen (handover_command) an eine, an mehrere oder an alle Mobilstationen adressiert ist.

In einer weiteren Ausführungsform senden die Feststationen Informationen über eingerichtete Gruppenkanäle aus. Aufgrund dieser Informationen können sich die Mobilstationen eine Zelle aussuchen, in der Gruppengespräche möglich sind, oder in der ein Gruppengespräch für die gewünschte Gruppe sogar bereits eingerichtet ist.

Der Gesprächsaufbau kann in der vom GSM-System bekannten Weise erfolgen, d.h. die Mobilstation sendet die Meldung channel_request (vgl. GSM Recommendation 04.08) und bekommt vom Netz mit der Meldung immediate_assignment einen individuellen Kanal zugeteilt. Danach kann die Identifikation, die Authentifizierung und die Verschlüsselung erfolgen. Falls das Gruppengespräch mit einem Gruppenschlüssel verschlüsselt ist, kann dieser Gruppenschlüssel jetzt abhörsicher der Mobilstation mitgeteilt werden. Das Netz weist der Mobilstation jetzt den Gruppenkanal der gewünschten Gruppe zu.

Eine weitere Möglichkeit für den Gesprächsaufbau besteht darin, daß das Netz Informationen über Gruppengespräche aussendet, und sich die Mobilstation aufgrund dieser Informationen direkt auf den Gruppenkanal der gewünschten Gruppe begibt.

Im folgenden ist die Wirkungsweise des Verfahrens dargestellt. Es werden zwei Alternativen beschrieben, die sich in ihrer Kanalorganisation unterscheiden.

### 1. Gruppengespräche im Halbduplexbetrieb ohne permanente verbindungsbegleitende Organisationskanäle ACCH (associated control channel) oder DCCH (dedicated control channel).

Hat sich die Mobilstation dem gewünschten Gruppenkanal zugeordnet, so hört sie den Kanal ständig nach Informationen, z.B. Sprache, oder Daten oder Inbandsignalisierung, ab.

Möchte sie selbst Informationen aussenden, so wartet sie, bis der Kanal frei ist, und sendet dann zunächst eine verkürzte Meldung ( z.B. wie in GSM Recommendation 04.08 spezifiziert, 'handover_access' ), die eine Referenz auf die Identität der zugreifenden Mobilstation enthalten kann. Bei Kollisionen mit gleichzeitig zugreifenden Mobilstationen der Gruppe kann der Zugriff in gewissen, zu berechnenden Abständen von der Mobilstation wiederholt werden.

Bei erkanntem Zugriff wird das Netz eine Meldung an die Mobilstation senden (z. B. wie 'physical information' in GSM 04.08), die z.B. Referenzen auf die Identität und eine Vorgabe für den zu wählenden Sendezeitpunkt enthält. Nach Empfang dieser Meldung vom Netz führt die Mobilstation alle notwendigen Regelkommandos aus, ( z.B. Neueinstellung des entfernungsabhängigen Sendezeitpunkt oder der Sendeleistung) und sendet ihre Informationen.

Diese Informationen werden von einer Gruppen-Steuereinheit, die in die Basisstation integriert oder über ein Netz erreichbar ist, empfangen und verarbeitet. Nutzsignale werden nach evtl. Umkodierung wieder ausgesendet und an die Gruppenteilnehmer verteilt.

Hat die sendende Mobilstation alle Informationen übertragen, bricht sie die Verbindung ab. Dies kann ohne zusätzliche Signalisierung geschehen. Durch das Aussenden einer Sendeabbruchmeldung kann jedoch der Kanaldurchsatz erhöht werden, da eine wartende Mobilstation nach dem Empfang der vom Netz reflektierten Sendeabbruchmeldung den Kanal sofort belegen kann.

Der zum Nutzkanal gehörende ACCH kann alle Funktionen, die zur Aufrechterhaltung der Verbindung der aktuell übertragenden Mobilstation mit dem Netz dienen, kontrollieren (z.B. Regelung des entfernungsabhängigen Sendezeitpunkt oder der Sendeleistung, vgl. 'timing advance' in ETSI-GSM Recommendation 05.08) , solange diese Übertragung dauert.

Ein Weiterreichen einer Mobilstation an einen entsprechenden Gruppenkanal in einer neuen Zelle ist während der Zeit, in der eine aktuelle Übertragung läuft, wie üblich (vgl. z.B. in GSM 04.08) möglich. Andrerseits kann die Mobilstation auch das Weiterreichen selbständig durchführen, wenn sie vom Netz Informationen über andere Zellen bekommt. Sie kann sich dann jeweils selbständig der für sie günstigsten Zelle zuordnen.

Ist eine Überwachung der Gruppenteilnehmer gefordert, so kann z.B. die Zentrale die Teilnehmergeräte in gewissen Abständen zum Aussenden von Meldungen auffordern.

### 2. Gruppengespräche im Halbduplexbetrieb mit verbindungsbegleitenden Organisationskanälen ACCH (associated control channel) oder DCCH (dedicated control channel).

Eine andere Realisierungsmöglichkeit für Gruppengespräche wird im folgenden am Beispiel eines GSM-Systems (GSM-900 oder DCS-1800) beschrieben.

Kennzeichen des Normalbetriebs von Duplex-Nutzkanälen in GSM ist der jedem Nutzkanal zugeordnete assoziierte Kontrollkanal ACCH, über den in Uplink-Richtung (Mobil- zu Basisstation) Meßinformation (z.B. Empfangspegel und -Qualität von beobachteten Nachbarkanälen) von der Mobilstation übertragen wird, und in Gegenrichtung neben allgemeinen Systeminformationen auch Kommandos zur Sendezeitpunktsregelung und zur Sendeleistungsregelung an die Mobilsstaion übertragen werden. Dieser ACCH hat für Vollraten-Nutzkanäle 1/26 und für Halbraten-Nutzkanäle 1/13 der Nutzkapazität (vgl. Figur 6a).

Die Erfindung schlägt vor, für Gruppengespräche pro Zelle und Gruppe einen "Gruppen-Nutzkanal" GTCH und mindestens einen "Gruppen-Kontrollkanal" GCCH zur Verfügung zu stellen. Dabei ist zu beachten, daß für eine übliche Mobilstation durch die simultane Bedienung von GTCH und GCCH keine Konflikte entstehen dürfen. Dies wird in GSM z.B. durch die Benutzung von zwei komplementären Halbraten-Teilkanälen ausgeschlossen.

Der GTCH (siehe Figur 6b) wird im Uplink von allen beteiligten Mobilstationen gemeinsam benutzt, jedoch zu einem Zeitpunkt immer nur von einer Mobilstation. Die auf dem Uplink vom Netz empfangene Nutz-Information wird durch eine Steuereinheit auf die angeschlossenen GTCHs in Downlinkrichtung verteilt. Dabei kann eine Umkodierung z.B. von Signaliserungsmeldungen oder Sprachsignalen notwendig sein.

Die zugeordneten GCCHs (siehe Figur 6c) werden im Vollduplexverfahren betrieben und durch ein Multiplex-Verfahren auf die an der Gruppe beteiligten Mobilstationen so aufgeteilt, daß sie jeweils die übliche Rolle von ACCHs für eine Vollduplex-Verbindung übernehmen können, z.B. zur Übertragung von Meßinformation im Uplink und von Regelinformation im Downlink.

Damit ist ein auf dem GSM-Halbratenkanal basierender GCCH in der Lage, bis zu zwölf Mobilstationen zu kontrollieren. Bei Bedarf können pro Gruppe mehrere GCCHs zur Verfügung gestellt werden.

Der Vorteil dieses Verfahrens besteht darin, daß durch die ständige Überwachung der beteiligten Verbindungen die Mobilstationen jeweils über die zum Senden notwendige Korrektur für den Sendezeitpunkt verfügen und daher die Benutzung des GTCH im Uplink keinen verkürzten Zugriff erfordert. Der Kanal kann sofort ohne Verzögerung zum Senden von Nutzinformation belegt werden, wenn er von der Mobilstation als frei erkannt wird. Im Falle von Kollisionen bei Mehrfachzugriffen, die durch die Steuereinheit im Netz oder durch die Mobilstationen selbst erkannt werden, kann ein erneuter Zugriff in gewissen, zu berechnenden Abständen von der Mobilstation wiederholt werden.

Ein weiterer Vorteil dieses Verfahrens besteht darin, daß einzelne Gruppengespräche bei Bedarf durch das Netz an Nachbarzellen weitergereicht werden können, wenn dort die entsprechenden Gruppenkanäle zur verfügung stehen. Dies ist im Prinzip mit Hilfe von Signalisierungsmeldungen auf den als ACCH betriebenen Teilkanälen möglich, kann aber z.B. unterstützt werden, indem der GCCH außer den ACCH zusätzliche Signalisierungskanäle (vgl. SDCCH in GSM) bereitstellt oder mit Hilfe von Inbandsignalisierung (vgl. FACCH) auf dem Nutzkanal.

Eine Variante besteht darin, den im GCCH (als Nutzkanal) ursprünglich vorhandenen ACCH und zunächst nicht verwendeten Teilkanal zur Steuerung der Zugriffe zu verwenden. Dieser zusätzliche Duplex-Kanal wird im folgenden dann "Zugriffskanal (Access-Channel)" genannt. Eine Mobilstation, die die Zuteilung des Uplink-GTCH wünscht, sendet auf dem Zugriffskanal eine Meldung, die den Zugriffswunsch signalisiert und die dem Netz ermöglicht, den GTCH gezielt zuzuteilen. Dies kann dadurch geschehen, daß eine aus dem Zugriffswunsch abgeleitete Meldung in Rückrichtung auf dem Downlink des Zugriffskanals oder auf dem Downlink des entsprechenden (GCCH-)ACCH zur Mobilstation gesendet wird.

## Patentansprüche

1. Mobilfunkanordnung mit Basisstationen und Mobilstationen zur Kommunikation zwischen Mobilstationen untereinander und/oder Mobilstationen und drahtgebundenen Teilnehmern, bei der eine Vielzahl von Uplink-Funkkanälen in Richtung von Mobilstation zu Basisstation und eine Vielzahl von Downlink-Funkkanälen in Richtung von Basisstation zu Mobilstation paarweise einander als Duplex-Funkkanäle zugeordnet sind und bei der zur Belegung eines Duplex-Funkkanals beziehungsweise zum Wechsel in ein Bündelfunksystem eine Signalisierung zwischen Basisstation und Mobilstation auf wenigstens einem Kontrollkanal vorgesehen ist, wobei in dem Bündelfunksystem sogenannte Gruppengespräche möglich sind, bei denen nur ein aktiver Teilnehmer einer Benutzergruppe sprechen kann, während alle anderen passiven Teilnehmer der Benutzergruppe diesen aktiven Teilnehmer lediglich hören können,
**dadurch gekennzeichnet,**
**dass** Koppelmittel zur Koppelung eines Uplink-Funkkanals oder eines drahtgebundenen Teilnehmers auf wenigstens einen Downlink-Funkkanal vorgesehen sind, um im Betrieb als Bündelfunksystem, bei dem die einzelnen Benutzer im Halbduplex-Verfahren auf einen Funkkanal zugreifen können, einen Duplex-Funkkanal für den aktiven Teilnehmer zu bilden, während für die passiven Teilnehmer im Halbduplexbetrieb Downlink-Funkkanäle geschaltet werden, wobei ein Kanal der Basisstation als Gruppenkanal benutzt wird, während auf den anderen Kanälen dieser Basisstation normaler Verkehr abgewickelt werden kann.

2. Anordnung nach Anspruch 1, **dadurch gekennzeichnet, dass** die Koppelmittel in mindestens einer Basisstation der Mobilfunkanordnung angeordnet sind.

3. Anordnung nach Anspruch 1, **dadurch gekennzeichnet, dass** die Koppelmittel als Konferenzschaltung in mindestens einer Vermittlungsanordnung der Mobilfunkanordnung angeordnet sind.

4. Anordnung nach Anspruch 1 zum Anschluß an ein Nachrichtenübertragungssystem,
**dadurch gekennzeichnet, dass** es mindestens ein Koppelmittel enthält, welches in der Lage ist, zumindest zeitweise vom Nachrichtenübertragungssystem ankommende Daten zum Nachrichtenübertragungssystem zurückzusenden.

5. Anordnung nach Anspruch 1, 2 oder 3,
**dadurch gekennzeichnet, dass** in der Mobilfunkanordnung für jede an einem Gruppengespräch beteiligte Mobilstation ein ausschließlich der jeweiligen Mobilstation zugeordneter Signalisierungskanal im Duplex-Verfahren vorgesehen ist.

6. Anordnung nach Anspruch 5, **dadurch gekennzeichnet, dass** diese Signalisierungskanäle eine Zeitmultiplexstruktur aufweisen.

7. Anordnung nach Anspruch 1, **dadurch gekennzeichnet, dass** Mittel in der Mobilstation vorgesehen sind, welche die zum koordinierten Senden auf dem Duplexkanal des aktiven Teilnehmers von der Mobilstation benötigten Informationen bestimmen, dass in der Mobilstation Mittel vorgesehen sind, verkürzte Zugriffsmeldungen auszusenden, dass in der Basisstation Mittel vorgesehen sind, diese Meldungen nach Ankunftszeitpunkt oder Inhalt zu analysieren und zu verarbeiten, und dass eine Steuereinheit im Funknetz vorgesehen ist, der Mobilstation eine Meldung zu übermitteln, die mindestens die zum Senden notwendigen Informationen enthält.

8. Anordnung nach Anspruch 5, **dadurch gekennzeichnet, dass** Mittel in der Mobilstation vorgesehen sind, welche die zum koordinierten Senden auf dem Gruppenkanal von der Mobilstation benötigten Informationen durch Kommunikation mit dem Funknetz auf dem ihr zugeordneten Signalisierungskanal bestimmen.

9. Anordnung nach Anspruch 1, **dadurch gekennzeichnet, dass** die Mobilstationen Mittel zur Prüfung, ob der Gruppenkanal frei ist, und Mittel zur Aussendung verkürzter Zugriffsmittel aufweisen, um im Falle, dass Informationen auf dem Gruppenkanal Übertragen werden sollen, die jeweilige Mobilstation auf den freien Gruppenkanal warten zu lassen und danach verkürzte Zugriffsmeldungen aussenden zu lassen, und auf den Empfang einer Rückmeldung warten zu lassen, um daraus die Zugriffsberechtigung auf den Gruppenkanal, den Zugriffszeitpunkt, den Sendezeitpunkt oder die Sendeleistung zu bestimmen.

10. Anordnung nach Anspruch 5, **dadurch gekennzeichnet, dass** dem Signalisierungskanal der aktiven Mobilstation ein gemeinsamer Gruppenkanal zugeordnet ist, dass Mittel zur Sendung einer Zugriffsmeldung vorhanden sind, die aktivierbar sind, wenn die Mobilstation Informationen auf dem gemeinsamen Gruppenkanal übertragen möchte, eine Steuereinheit dafür ausgebildet ist, im Funknetz die Meldungen von verschiedenen Mobilstationen zu koordinieren und die Zugriffsberechtigung auf den gemeinsamen Gruppenkanal durch Rückmeldungen zu erteilen.

11. Anordnung nach Anspruch 8, **dadurch gekennzeichnet, dass** Mittel in der Mobilstation vorgesehen sind, eine gewisse, zu berechnende Zeit auf die erforderliche Rückmeldung vom Funknetz zu warten, wenn die Mobilstation dem Funknetz den Zugriffswunsch auf den Gruppenkanal signalisiert hat, und dass Mittel in der Mobilstation vorgesehen sind, danach den Zugriffswunsch zu wiederholen, wenn vom Funknetz keine Reaktion erfolgt.

12. Anordnung nach einem der Ansprüche 1 bis 11, **dadurch gekennzeichnet, dass** Mittel in der Mobilstation vorgesehen sind, um nach Aussenden der auf dem Gruppenkanal zu sendenden Information den Gruppenkanal ohne Signalisierung frei zu geben.

13. Anordnung mit Mobilfunkzellen nach einem der Ansprüche 1 bis 12, **dadurch gekennzeichnet,**
**dass** zwei oder mehrere Gruppenkanäle in der gleichen oder verschiedenen Zellen miteinander verkoppelt sind.

14. Anordnung nach einem der Ansprüche 1 bis 13, wobei die einzelnen Teilnehmer einen normalen Gesprächsaufbau mit einer Steuereinheit im Funknetz vollziehen, **dadurch gekennzeichnet, dass** die Steuereinheit Mittel aufweist, um die Teilnehmer am Gruppengespräch auf den gewünschten Gruppenkanal zu verweisen.

15. Anordnung nach einem der Ansprüche 1 bis 14, **dadurch gekennzeichnet, dass** Mittel vorgesehen sind, die Kommunikation während des normalen Gesprächsaufbaus mit dem Schlüssel des individuellen aktiven Teilnehmers zu verschlüsseln und dann dem aktiven Teilnehmer den Schlüssel für das Gruppengespräch zuzuteilen.

16. Anordnung nach einem der Ansprüche 1 bis 15, **dadurch gekennzeichnet, dass** die Mobilfunkanordnung über Mittel verfügt, um Informationen über Kanäle für Gruppengespräche auszusenden.

17. Anordnung nach Anspruch 16, **dadurch gekennzeichnet, dass** Mittel vorgesehen sind, welche bewirken, dass sich die Mobilstationen aufgrund der von der Mobilfunkanordnung ausgesendeten Informationen über Gruppengespräche einer Zelle beziehungsweise einem Gruppenkanal zuordnen.

18. Anordnung nach Anspruch 5, **dadurch gekennzeichnet, dass** der einer Mobilstation zugeordnete permanente Signalisierungskanal zur Teilnehmerüberwachung oder für sicherheitsrelevante Dienste während der Gruppengesprächs vorgesehen ist.

19. Anordnung nach einem der vorangegangenen Ansprüche, **dadurch gekennzeichnet, dass** die Duplex-Funkkanäle, die auf dem ETSI-GSM-Standard beruhen, vorgesehen sind.

## Claims

1. Mobile radio arrangement with base stations and mobile stations for communication between mobile stations and/or between mobile stations and wire-based subscribers, in which a large number of uplink radio channels are associated with one another in pairs as duplex radio channels in the direction from the mobile station to the base station, and a large number of downlink radio channels are associated with one another in pairs as duplex radio channels in the direction from the base station to the mobile station, and in which signalling from the base station and the mobile station is provided on at least one monitoring channel relating to the use of a duplex radio channel and/or to a change to a bundled radio system, with so-called group calls being possible in the bundled radio system, in which only one active subscriber can speak to one user group, while all the other passive subscribers in the user group can only listen to this active subscriber,
**characterized**
**in that** coupling means are provided for coupling an uplink radio channel or a wire-based subscriber to at least one downlink radio channel, in order to form a duplex radio channel for the active subscriber during operation as a bundle radio system, in which the individual users can access a radio channel using the half-duplex method, while downlink radio channels are connected for the passive subscribers in the half-duplex mode, with one channel of the base station being used as a group channel, while normal traffic can be handled on the other channels for this base station.

2. Arrangement according to Claim 1, **characterized in that** the couplings are arranged in at least one base station in the mobile radio arrangement.

3. Arrangement according to Claim 1, **characterized in that** the coupling means are arranged as a conference circuit in at least one switching arrangement in the mobile radio arrangement.

4. Arrangement according to Claim 1, for connection to a message transmission system, **characterized in that** the system contains at least one coupling means, which are able, at least at times, to send back data arriving from the message transmission system to the message transmission system.

5. Arrangement according to Claim 1, 2 or 3, **characterized in that** a signalling channel, which is associated exclusively with the respective mobile station, is provided using the duplex method in the mobile radio arrangement for each mobile station which is involved with a group call.

6. Arrangement according to Claim 5, **characterized in that** these signalling channels have a time-division multiplex structure.

7. Arrangement according to Claim 1, **characterized in that** means are provided in the mobile station which determine the information which is required for coordinated transmission on the duplex channel for the active subscriber from the mobile station, **in that** means are provided in the mobile station for transmission of shortened access messages, **in that** means are provided in the base station for analysis and processing of these messages based on their arrival time or content, and **in that** a control unit is provided in the radio network in order to transmit to the mobile station a message which contains at least the information that is required for transmission.

8. Arrangement according to Claim 5, **characterized in that** means are provided in the mobile station which determine the information which is required for coordinated transmission on the group channel from the mobile station, by communication with the radio network on the signalling channel which is allocated to it.

9. Arrangement according to Claim 1, **characterized in that** the mobile station has means for checking whether the group channel is free and has means for transmission of shortened access means, in order, in this situation, where the aim is to transmit information on the group channel, to cause the respective mobile station to wait for the free group channel and then to transmit shortened access messages, and to cause it to wait for reception of an acknowledgement, in order to use this to determine the access authorization to the group channel, the transmission time or the transmission power.

10. Arrangement according to Claim 5, **characterized in that** a common group channel is allocated to the signalling channel for the active mobile station, **in that** means are provided for transmission of an access message, which means can be activated when the mobile station wishes to transmit information on the common group channel, a control unit is designed to coordinate messages from different mobile stations in the radio network, and to grant access authorization to the common group channel by means of acknowledgements.

11. Arrangement according to Claim 8, **characterized in that** means are provided in the mobile station in order to wait for a certain time, which can be calculated, for the required acknowledgement from the radio network once the mobile station has signalled to the mobile network that it wishes to have access to the group channel, and **in that** means are provided in the mobile station for subsequently repeating the access request when there is no reaction from the radio network.

12. Arrangement according to one of Claims 1 to 11, **characterized in that** means are provided in the mobile station in order to release the group channel without signalling after transmission of the information to be transmitted on the group channel.

13. Arrangement with mobile radio cells according to one of Claims 1 to 12, **characterized in that** two or more group channels are coupled to one another in the same cell or in different cells.

14. Arrangement according to one of Claims 1 to 13, in which the individual subscribers complete a normal call setting-up procedure with a control unit in the radio network, **characterized in that** the control unit has means for allocating the subscribers to the group call to the desired group channel.

15. Arrangement according to one of Claims 1 to 14, **characterized in that** means are provided for scrambling the communication during the normal call setting-up procedure using the key of the individual active subscriber, and then for allocating the key for the group call to the active subscriber.

16. Arrangement according to one of Claims 1 to 15, **characterized in that** the mobile radio arrangement has means in order to transmit information via channels for group calls.

17. Arrangement according to Claim 16, **characterized in that** means are provided which result in the mobile stations being allocated to a cell or to a group channel on the basis of the information about group calls transmitted from the mobile radio arrangement.

18. Arrangement according to Claim 5, **characterized in that** the permanent signalling channel which is allocated to a mobile station is intended for subscriber monitoring or for safety-relevant services during the group call.

19. Arrangement according to one of the preceding claims, **characterized in that** the duplex radio channels which are provided are based on the ETSI-GSM-Standard.

## Revendications

1. Système de radiocommunication mobile qui présente des stations de base et des postes mobiles pour la communication entre les postes mobiles et/ou entre les postes mobiles et des abonnés fixes, dans lequel plusieurs canaux radio montants dans la direction allant de poste mobile à station de base et plusieurs canaux radio descendants dans la direction allant de station de base à poste mobile sont appariés en canaux radio duplex et dans lequel, pour l'occupation d'un canal radio duplex ou selon le cas pour un échange dans un système radio à ressources partagées, une signalisation est prévue sur au moins un canal de contrôle entre station de base et poste mobile, des conversations dites en groupe étant possibles dans le système radio à ressources partagées et permettant à un seul abonné actif d'un groupe d'utilisateurs de parler, tous les autres abonnés passifs du groupe d'utilisateurs pouvant uniquement écouter cet abonné actif,
**caractérisé en ce que**
des moyens de couplage qui couplent un canal radio montant ou un abonné fixe à au moins un canal radio descendant sont prévus pour, lors du fonctionnement en système radio à ressources partagées dans lequel les utilisateurs individuels peuvent accéder à un canal radio par le procédé semi-duplex, former un canal radio duplex pour l'abonné actif tandis que les canaux radio descendants sont basculés en fonctionnement semi-duplex pour les abonnés passifs, un canal de la station de base étant utilisé comme canal de conférence et un trafic normal pouvant être établi sur les autres canaux de cette station de base.

2. Système selon la revendication 1, **caractérisé en ce que** les moyens de couplage sont disposés dans au moins une station de base du système de radiocommunication mobile.

3. Système selon la revendication 1, **caractérisé en ce que** les moyens de couplage, qui ont la forme d'un circuit dit de conférence, sont disposés dans au moins un système de central du système de radiocommunication mobile.

4. Système selon la revendication 1, prévu pour le raccordement à un système de transmission de messages, **caractérisé en ce qu'**il contient au moins un moyen de couplage qui est en mesure, au moins à certains moments, de renvoyer au système de transmission de messages des données qui proviennent du système de transmission de messages.

5. Système selon les revendications 1, 2 ou 3, **caractérisé en ce que** dans le système de radiocommunication mobile, un canal de signalisation associé de manière exclusive à chaque poste mobile est prévu dans le procédé duplex pour chaque poste mobile qui participe à une conversation de conférence.

6. Système selon la revendication 5, **caractérisé en ce que** ces canaux de signalisation présentent une structure multiplexée dans le temps.

7. Système selon la revendication 1, **caractérisé en ce que** dans le poste mobile sont prévus des moyens qui définissent sur le canal duplex de l'abonné actif les informations nécessaires à la coordination de l'émission par le poste mobile, **en ce que** dans le poste mobile sont prévus des moyens qui émettent des messages raccourcis de demande d'accès, **en ce que** dans la station de base sont prévus des moyens pour analyser et traiter ces messages en fonction de l'instant de leur réception ou en fonction de leur contenu et **en ce que** dans le réseau de radiocommunication est prévue une unité de commande qui transmet au poste mobile un message qui contient au moins les informations nécessaires à l'émission.

8. Système selon la revendication 5, **caractérisé en ce que** dans le poste mobile sont prévus des moyens qui, en communiquant avec le réseau de radiocommunication sur le canal de signalisation qui lui est associé, définissent les informations nécessaires à la coordination de l'émission par le poste mobile sur le canal de conférence.

9. Système selon la revendication 1, **caractérisé en ce que** les postes mobiles présentent des moyens pour vérifier si le canal de conférence est libre et des moyens pour envoyer des messages raccourcis de demande d'accès pour, au cas où des informations doivent être transmises sur le canal de conférence, faire attendre le poste mobile concerné sur le canal de conférence libre et ensuite lui faire envoyer des messages raccourcis de demande d'accès et pour leur faire attendre la réception d'un message de réponse pour déterminer à partir de cela l'autorisation d'accès au canal de conférence, l'instant de l'accès, l'instant de l'émission ou la puissance d'émission.

10. Système selon la revendication 5, **caractérisé en ce qu'**un canal de conférence commun est associé au canal de signalisation du poste mobile actif, **en ce que** des moyens sont prévus pour émettre un message de demande d'accès, ces moyens pouvant être activés lorsque le poste mobile souhaite transmettre des informations sur le canal de conférence commun, une unité de commande étant configurée pour coordonner les messages de différents postes mobiles dans le réseau de radiocommunication et pour accorder l'autorisation d'accès au canal de conférence commun par des messages de réponse.

11. Système selon la revendication 8, **caractérisé en ce que** des moyens sont prévus dans le poste mobile pour attendre pendant un certain temps, qui doit être calculé, le message de réponse nécessaire du réseau de radiocommunication lorsque le poste mobile a signalé au réseau de radiocommunication sa demande d'accès au canal de conférence, et **en ce que** des moyens sont prévus dans le poste mobile pour ensuite répéter la demande d'accès si le réseau de radiocommunication ne réagit pas.

12. Système selon l'une des revendications 1 à 11, **caractérisé en ce que** des moyens sont prévus dans le poste mobile pour libérer le canal de conférence sans signalisation après l'émission des informations à envoyer sur le canal de conférence.

13. Système doté de cellules de radiocommunication mobile selon l'une des revendications 1 à 12, **caractérisé en ce que** deux ou plusieurs canaux de conférence sont couplés les uns aux autres dans la même cellule ou dans des cellules différentes.

14. Système selon l'une des revendications 1 à 13, dans lequel les abonnés individuels établissent une conversation normale avec une unité de commande du réseau de radiocommunication, **caractérisé en ce que** l'unité de commande présente des moyens pour attribuer le canal de conférence souhaité aux abonnés concernés par une conversation de conférence.

15. Système selon l'une des revendications 1 à 14, **caractérisé en ce que** des moyens sont prévus pour crypter la communication pendant l'établissement d'une conversation normale à l'aide de la clé de l'abonné actif individuel et pour communiquer ensuite à l'abonné actif la clé pour la conversation de conférence.

16. Système selon l'une des revendications 1 à 15, **caractérisé en ce que** le système de radiocommunication mobile dispose de moyens pour envoyer des informations sur des canaux de conversation de conférence.

17. Système selon la revendication 16, **caractérisé en ce que** sont prévus des moyens qui ont pour effet que les postes mobiles s'associent à une cellule ou selon le cas à un canal de conférence sur base des informations sur les conversations de conférence émises par le système de communication mobile.

18. Système selon la revendication 5, **caractérisé en ce que** le canal permanent de signalisation attribué à un poste mobile est prévu pour la surveillance de l'abonné ou pour des services de sécurité pendant la conversation de conférence.

19. Système selon l'une des revendications précédentes, **caractérisé en ce que** des canaux de radiocommunication duplex qui sont basés sur la norme ETSI-GSM sont prévus.
